# EUROPÄISCHE PATENTANMELDUNG

(11) **EP 0 655 427 A2**
(43) Veröffentlichungstag der Anmeldung: **31.05.1995**
(21) Anmeldenummer: 94113687.1
(22) Anmeldetag: 01.09.1994
(51) Int. Cl.: C05F 17/02, C05F 9/02

(54) **Die baureihe der Pavillon-komposter**

(30) Priorität: 07.09.1993 DE 9313502 U
(71) Anmelder: Jaeger, Georg, D-82319 Starnberg (DE)
(72) Erfinder: Jaeger, Georg, D-82319 Starnberg (DE)
(74) Vertreter: Klunker . Schmitt-Nilson . Hirsch

(57) **Zusammenfassung**

Im Zuge einer zeitgemäßen Restmüll-Reduzierung wird der damit verbundenen Kompostierung organischer Wertstoffe aus Küchen- und Gartenabfällen Vorrang gegeben.

Die zentrale Kompostierung über Großanlagen ist zumeist mit hohen Kosten verbunden und belastet die Umwelt mit einem hohen Transportaufkommen. Zudem kommen diese Werke aufgrund fehlenden Vertrauens der Abnehmer in das Produkt (u.U. belastetes Ausgangsmaterial) häufiger in Absatzschwierigkeiten.

In vielen Ländern (z.B. Schweiz und BRD) bestehen daher regierungsseits Vorgaben/Vorschriften, daß einer weitgehendsten dezentralen Kompostierung der Vorzug zu geben ist.
Neben den bestehenden Kleinkompostern zieht dies einen hohen Bedarf an mittelgroßen, mittel- bis dezentral zu bewirtschaftenden Anlagen nach sich, die unter knapper werdenden Lebensräumen flächendeckend und platzsparend sind.

Mit hohen Jahreskapazitäten, geringem Platzbedarf, hohem Integrations- und Kombinationsvermögen (Genehmigungsfreiheit bzw kurzer Genehmigungsweg), universeller Handhabung, integraler Sickerwasserrückführung, Einhausung, hoher Sauerstoffzufuhr, natürlichen Reifemöglichkeiten, Ganzjahresbetrieb und einem hochwertigen, und transparent zustande kommenden Kompostprodukt ist die Baureihe der Pavillon-Komposter auf eine ausgeglichene ökologische und ökonomische Bilanz ausgerichtet und für das Breitenspektrum privater, gewerblicher und kommunaler Bedarfsträger konzipiert.

## Beschreibung

### Technisches Gebiet: Kompostieranlagen

### Stand der Technik:

Die Druckschriftenermittlung des DPA vom 06.07.94, Az.:
G 93 13 502.5, Klasse C05F 9/02, 17/02, hat folgende, auf diesem Gebiet bereits veröffentlichte Druckschriften ergeben:
DE 30 19 253 C2; DE 25 42 667 B2; DE 87 11 257 U1; DE 30 15 164 C2; DE-OS 15 59 202.
Die hierin angemeldeten Erfindungen erfüllen jedoch nicht, bzw nur zum Teil, die Funktionen, die die erfindungsgemäße Baureihe gewährleistet, wie z.B.
Ganzjahresbetrieb durch Isolierplatten, die die Einhausung der Anlage ermöglichen und ein dem Rotteprozess förderliches Kleinklima im Inneren bewirken,
integrale Sickerwasser-Rückführung, die den Betrieb der Anlage auch in Siedlungsgebieten und gewässergeschützten Zonen erlaubt und dem Kompostiergut die wertvollen, da stickstoffhaltigen Sickersäfte wieder zuführen läßt,
Kompostentnahmen nach gewünschtem Reifegrad aus entsprechenden Ebenen sowie manuelle und/oder maschinelle Beschickung und Entleerung,
bedarfsgerechte Modellgrößen, die in Modul-Bauweise beliebig erweiterbar sind und bis zu 50 cbm umbauten Raumes (in der BRD) baugenehmigungsfrei sind,
trotz der Dichtigkeit gegen Sickerwasseremmissionen eine zur Erzeugung eines hochwertigen (Wurm-)Kompostes förderliche Passage zum Mutterboden aufweist,
eine hohe, allseitige Sauerstoffzufuhr und augenscheinliche, wie manuelle Kontrollen in Bezug auf eine unsachgemäße Befüllung zuläßt und den Kompost wunschgemäß frei gibt (beim Benz'schen Wannenkomposter und beim Kompostbereiter nach Schubert verdämmt sich der Kompost über der als Passier-Rost vorgesehenen Ebene und fällt nicht in die dafür vorgesehene Kammer/Zone), da die Bodenroste im PK nicht als Passier- oder Siebrost fungieren, sondern als Entnahmerost.
Weitere, in den genannten Druckschriften angemeldete Erfindungen sind darüber hinaus nach Größe und technischem/mechanischem Aufwand ohne Motorantrieb für Anlagen der konzipierten PK-Größen nicht anwendbar bzw motorbetrieben auch nicht zur Anmeld ung gebracht und stellen mehr oder weniger Klein-Silos dar.

### Würdigung des Standes der Technik bzw Abfallverwertung:

Auf dem Gebiete kleiner Kompostbereiter und zentraler Großkompostieranlagen existiert eine Vielzahl an Entwicklungen.
Für eine genauso notwendige mittel- bis dezentrale Kompostierung (z.B. in Wohnansiedlungen, größeren gärtnerischen Anlagen oder Erwerbsanbau oder Garten- und Landschaftsbau) fehlen (m.E.) entsprechende Anlagen, die bei hoher Jahreskapazität,einen geringen Platzbedarf haben und Menschen dazu anhalten, Küchen- und Gartenabfälle in der verbreiteten Entsorgungsmentalität nicht nur zur Kompostierung in Großanlagen (unter einem umweltschädlich hohen Transportaufkommen und hohen Betriebskosten) abzuliefern sondern nach Vorbild der Kompostwirtschaft, wie sie in der Natur abläuft, dort zu kompostieren und wieder zu verwerten, wo die organischen Abfälle entstehen und dringend wieder gebraucht werden.
In vielen Großkompostieranlagen bestehen darüber hinaus bereits Absatznöte wegen fehlender Abnahmebereitschaft, die beim Gärtner aus der Befürchtung entsteht, sich damit evtl. belastetes Material (z.B. Schwermetalle oder chemische Pflanzenschutzmittel) unumkehrbar in seinen Bereich zu holen. Ebenso haben Gewerbetreibende für ihre Ablieferungen weite Anfahrtswege und Abgabegebühren in Kauf zu nehmen, die mit einer eigenen Anlage unnötig werden und Aufwendungen den Zukauf von Kompost (von Qualitätserzeugern) erspart.
Der Kleingärtner oder Einzelverbraucher liefert ebenso aus Platzmangel oder Bequemlichkeit planzliche Wertstoffe zentral ab und kauft zur Bodenverbesserung vielerorts chemische Düngemittel und Torf zu bzw ist im Trend zu einer gesunden Ernährung dazu bereit, einen hohen Preis für die Erzeugnisse aus dem Bio-Anbau für Obst und Gemüse zu zahlen, das er selbst aus den genannten Wertstoffen gewinnen könnte.

### Darstellung der Erfindung - vorteilhafte Wirkungen:

Die Baureihe der Pavillon-Komposter beinhaltet Kompostieranlagen mit Einfüllvoluminas von 15, 25, 40 und
- in Modulbauweise beliebig- mehr Kubikmeter, die zu jeder Jahreszeit, kontinuierlich und automatisch organische Abfälle zu Kompost verarbeiten.

Sie sind für eine möglichst dezentrale Kompostierung für den kommunalen, betrieblichen und privaten Bereich konzipiert, sollen Großkompostieranlagen unter den Gesichtspunkten des Umweltschutzes sinnvoll ergänzen bzw vermeiden helfen und mit ihren reinen Naturerzeugnissen (in der BRD fällt dieses Produkt unter den dadurch reduzierten Steuersatz, wie Lebensmittel) ein reiches Bodenleben ohne künstliche Dünge- und Pflanzenschutzmittel wieder herstellen.
Diese dezentrale Kompostierung wird in vielen Ländern, wie z.B. auch Schweiz und der BRD,staatlich vorgegeben und gefördert.
Die Baureihe umfaßt -im Pavillon-Stil- mit den Modellen ROSENINSEL, MAINAU und BORNHOLM die sechseckigen Formen (15, 25 und 40 cbm Einfüllvolumen), mit Modell JURA 01-0X die quadratischen Formen und ist in jede Richtung und Größenordnung beliebig erweiterbar (Modulbauweise).
Freistehend, im Eck- oder Hangeinbau,fügen sie sich mit ihren überwiegenden Holzflächen der ISO-Platten in gepflegte Parkanlagen ebenso ein, wie in Wohngebiete.
Mit Durchmessern von 2,85, 3,50, 4,50, 5,50 m (bis beliebig im Modul) und Bauhöhen von 3,00 m sind sie bis zu 50 cbm umbauten Raumes in der BRD frei von Baugenehmigungen und entsprechend platzsparend.
Aufgrund der allseitig umfassenden ISO-Platten in Verbindung mit den Zuluftgittern, Bodenrosten, Rückhaltebecken und Zuluftkörben entsteht -bei sachgerechter Handhabung- im Inneren der Anlage ein für den Rotteprozess ideales Kleinklima mit allseitig hoher Sauerstoffzufuhr, das in ausgewogenem Maße die Bedingungen für einen effizienten und schnellen Rotteprozess (Wärme, Feuchtigkeit, Sauerstoff) schafft. Auch durch die erfindungsgemäße Passage zwischen Kompostiergut und Mutterboden, die den ungehinderten Zugang der Kleinsttierwelt (wie z.B. Regenwürmer) und Erdbakterien zur Rotte ermöglicht, wird der Prozess entscheidend beschleunigt und die Kompostqualität höchster Güte (Wurm- oder Reife-Kompost) erreicht.
Unter genannten prozessbeschleunigenden Bedingungen wird
- je nach Sorgfalt im Handling, Art und Schichtung des Füllgutes und vorherrschenden regionalen Temperaturenein Jahresdurchsatz am 6-10-fachen des Einfüllvolumens erreicht.
Vergleichsweise ersetzt das Modell ROSENINSEL mit einer Grundfläche von ca 8 qm eine herkömmliche Kompostmiete von 150 m Länge, 2m Breite und ca 1,20m Höhe.
Die Einfüllbreiten und -höhen sind mit entsprechend variabel steckbaren Zuluftgittern und ISO-Platten und gleichermaßen steckbaren Dachsegmenten so konzipiert, daß eine Beschickung/Entleerung der Anlage sowohl von Hand, als auch mit Maschine (Frontlader, Bobcats udgl.) möglich ist (von Hand ist ab 2. Gitterhöhe ein Podest erforderlich, wie auch auf Wertstoffhöfen üblich).
Die Anlage weist ein hohes Maß an Umweltverträglichkeit auf durch
- die integrale Sickerwasserrückführung über die Rückhaltebecken (Rückhalt der emmissionsträchtigen, aber wertvollen, da stickstoffhaltigen,Sickersäfte als natürlichen Flüssigdünger -im Verhältnis 1:10 Sickersaft : Wasser) oder zum in Hitzeperioden u.U. notwendig werdenden Befeuchten des Füllgutes, aber auch in Verbindung mit der Einhausung der Anlage (bei längeren Niederschlagsperioden)keine Vermehrung der Sickersäfte und kein Fäulnisvorgang im Füllgut durch Nässebildung,
- die idealen Rotteprozess-Bedingungen (z.B. hohe Sauerstoffzufuhr) entstehen im Füllgut keine anaeroben Situationen mit damit einhergehender Geruchsbelästigung, gleichzeitiger Effekt:die zuverlässige Vernichtung aller bakteriellen, pilzlichen und tierischen Schadenerreger im eingebrachten Kompostiermaterial
   und erlaubt eine entsprechend schnelle und problemfreie Genehmigung bzw Genehmigungsfreiheit bis zu den genannten 50 cbm an umbautem Raum mit der Integrierfähigkeit in Wohnsiedlungen, Parklandschaften und jede Gelände- oder Grundstücksform.
Die Anlagen werden derzeit in der Schweiz/Liechtenstein in Fertigbeton-Bausätzen vertrieben, aus vertriebstechnischen Gründen (Gewichtsreduzierung) werden sie in übrigen Vertragsgebieten vornehmlich in gekanteten Stahlblechen (Patentanspruch) in den tragenden Elementen, die Rückhaltebecken in BAYDUR-Umweltkunststoff hergestellt, haben eine Lebensdauer über mehrere Generationen, keinen Energieeinsatz (Nutzung in Verbindung mit Solar- oder Photovoltaik-zellen in Sonderheit), niedrigste Betriebskosten und erfordern außer dem gelegentlichen Anstrich der ISO-Holzverbundplatten und Reinigen von Gittern, Rosten oder Rückhaltebecken keine Wartungsarbeiten.

Die einzelnen Fertigbau-Elemente sind auch von Hand und Hilfspersonal einfach zu montieren, ggfs auch zu demontieren und können z.B. schonend in bereits bebautes oder eingewachsenes Terrain eingebracht werden.

### Darstellung des Weges zur Ausführung der Erfindung:

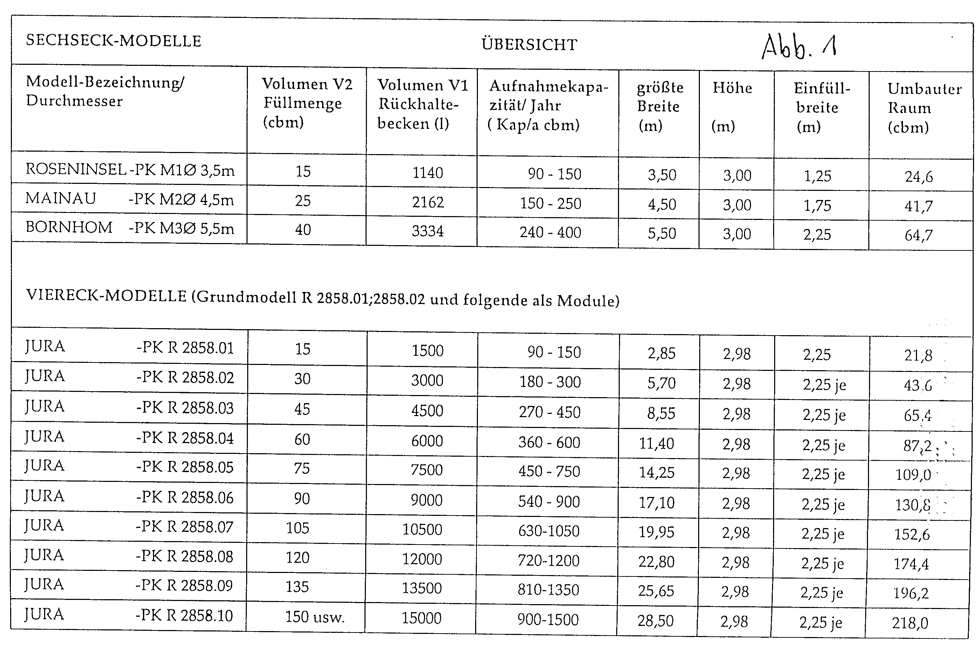

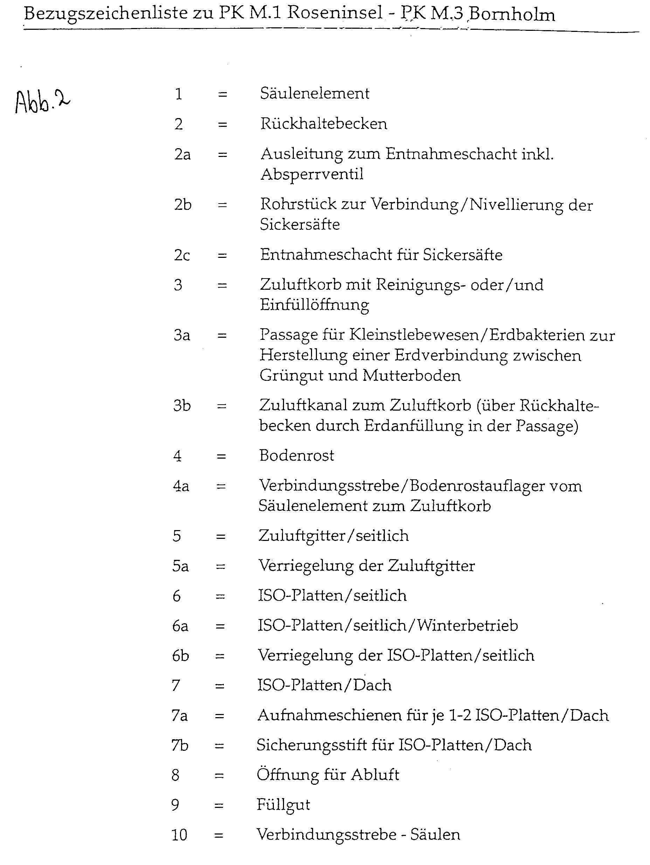

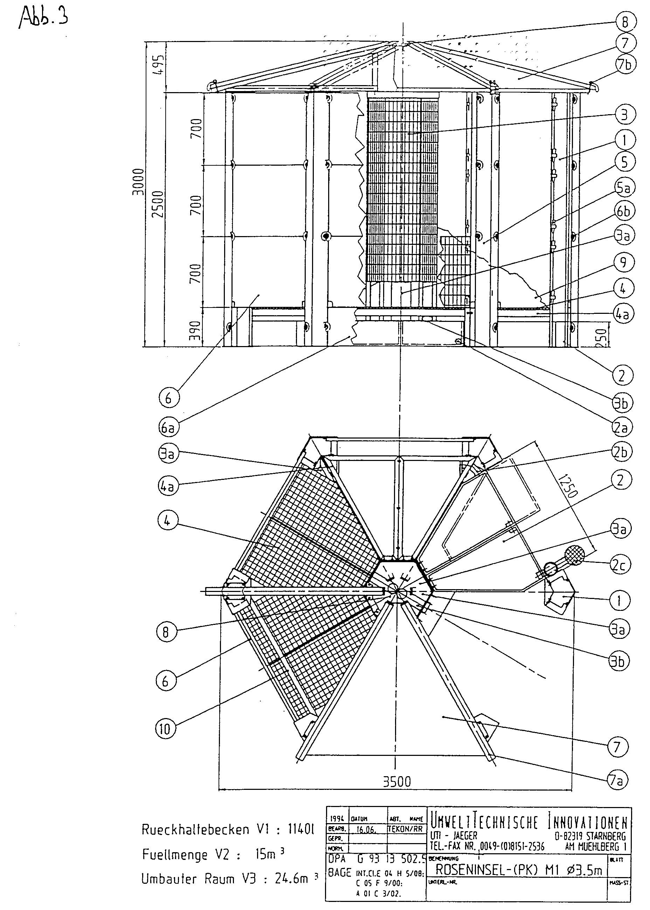

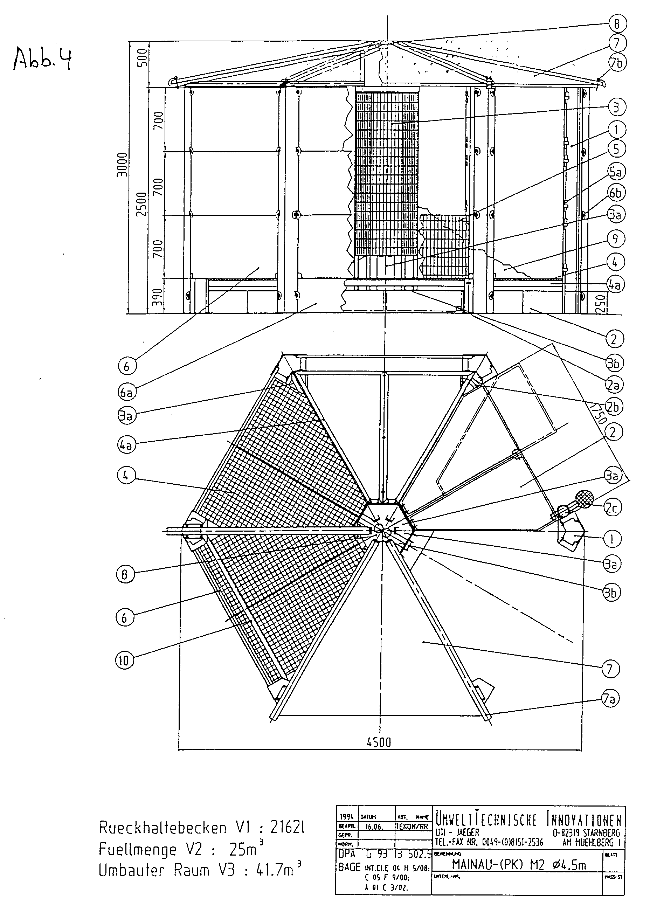

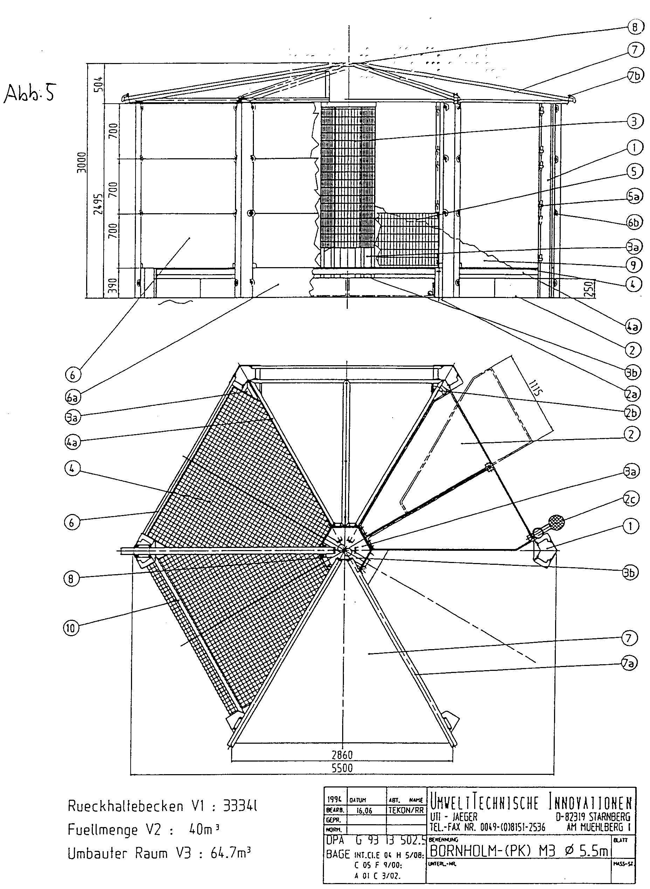

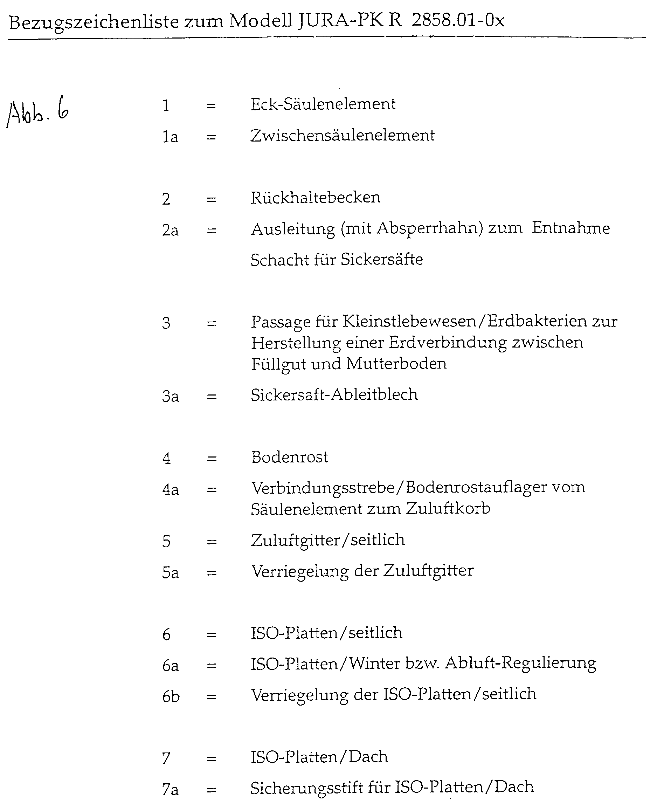

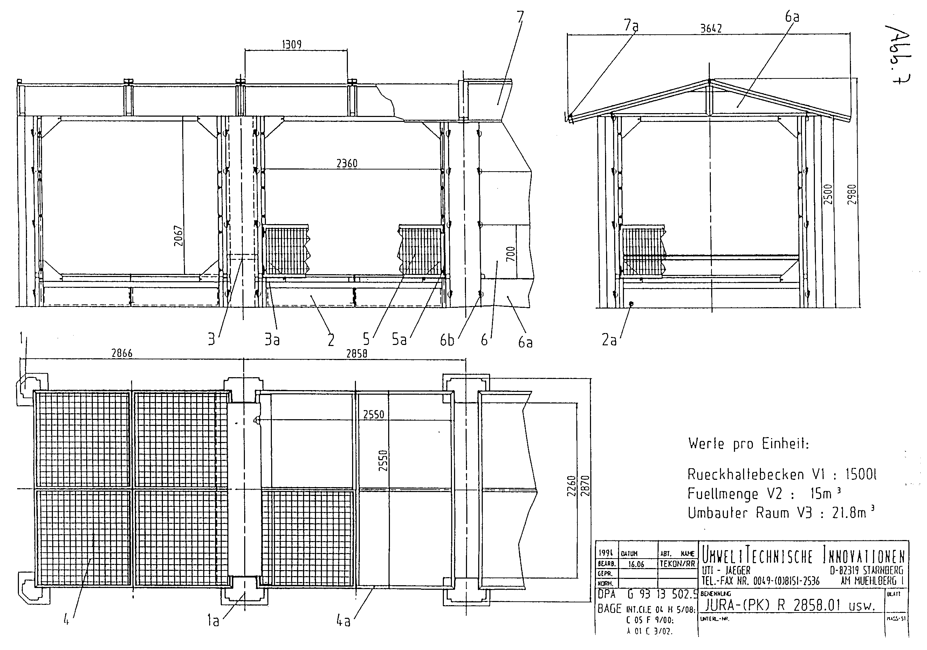

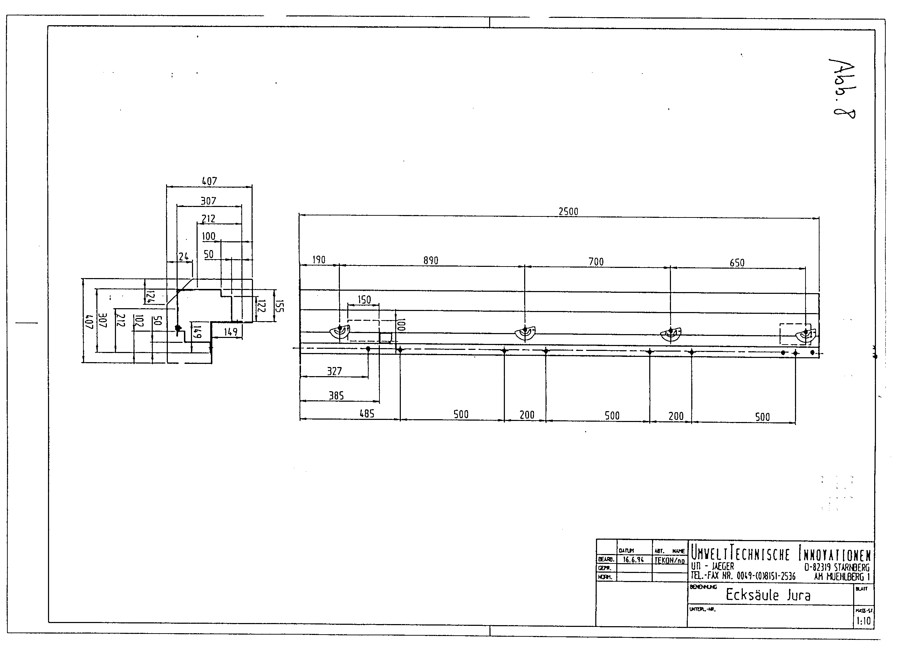

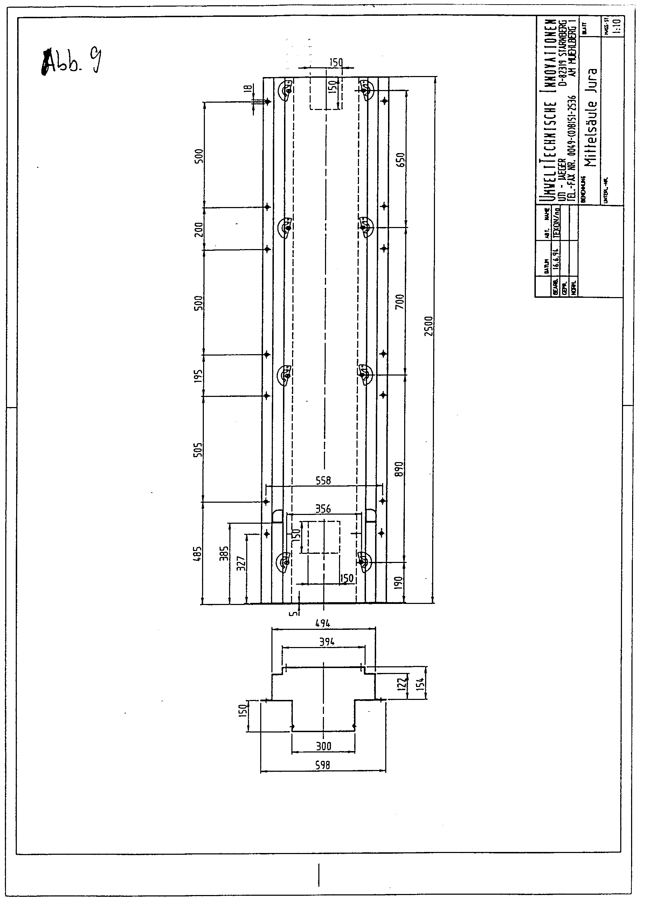

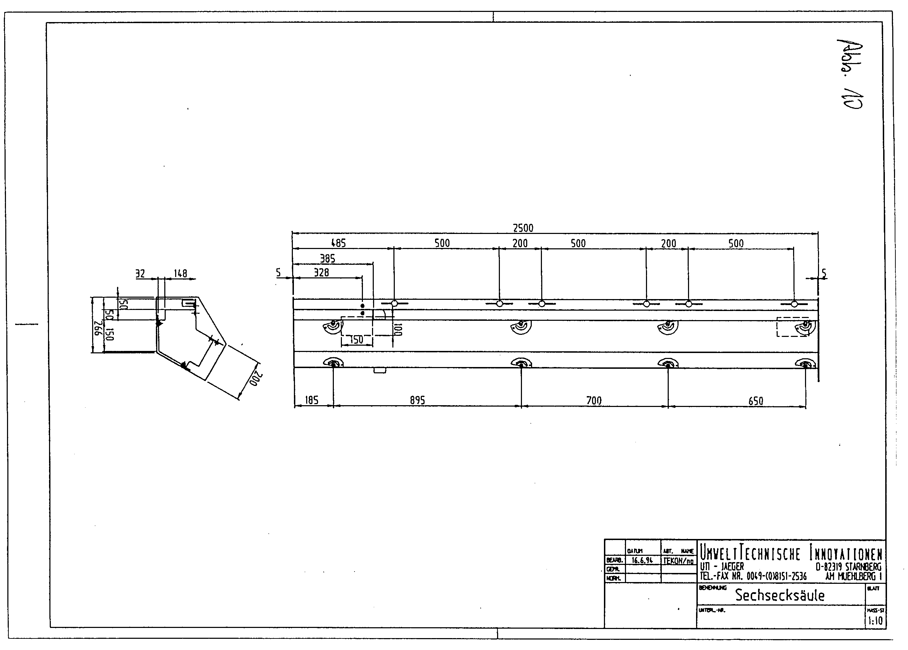

Das Ausführungsbeispiel wird anhand der beiliegenden Zeichnungen und zugehörigen Bezugszeichenlisten erläutert (Abb.1=Modellübersicht; Abb.2=Bezugszeichenliste zu PK M.1 Roseninsel-PK M.3 Bornholm; Abb.3-5 =Zeichnungen zu Modell Roseninsel, Mainau und Bornholm; Abb.6=Bezugszeichenliste zu Modell Jura; Abb.7=Zeichnung zu Modell Jura; Abb.8 und 9=Zeichnungen zu den Eck- und Mittelsäulen Mod. Jura; Abb.10=Zeichnung zur Sechsecksäule der Modelle Roseninsel, Mainau und Bornholm).
Die Abläufe in den Sechseck-Modellen sind analog derer in den quadratischen Jura-Modellen mit der Ausnahme, daß beim Mod. Jura (Abb.7, Nr.3) wie bei den Sechseckmodellen zwar die Passage besteht, jedoch auf einen Zuluftkorb (z.B. Abb.3, Nr.3) verzichtet werden konnte.
Für das Ausführungsbeispiel wird daher einheitlich die Abb.2 und 3 zugrunde gelegt.
Abb.3 zeigt, wie je nach erreichter Füllhöhe die Zuluftgitter und ISO-Platten aufgesteckt oder abgenommen werden können und das Füllgut (Abb.3, Nr.9) über die Seiten oder auch über ein offenes Dachsegment (Abb.3, Nr.7) manuell oder maschinell eingebracht werden kann bzw Kompost aus der gewünschten Ebene (nach Reifegrad) entnommen wird.
Es werden dabei von oben her kontinuierlich neue Schichten mit kompostierbarem Material eingebracht (Silo).
Unter den im PK vorherrschenden günstigen Bedingungen der Sauerstoff-, Feuchtigkeits- und Wärmezufuhr bzw Prozesswärmespeicherung sowie der Passage für Kleinstlebewesen (Abb.3, Nr. 3a) entsteht im Füllgut der permanente Rotteprozess, wobei das im PK entsprechend hoch zu schichtende Füllgut (Abb.3, Nr.9) die entstehende Prozesswärme fördert.
In diesem Kreislauf gelangen die zuerst gereiften Schichten in die unterste Entnahmeebene (Abb.3, Nr.4) über den Bodenrosten (Bereich unterstes Zuluftgitter) und bilden so den Reifekompost, die später eingebrachten Schichten den weniger reifen bis Rohkompost bzw das frische Füllgut.
Die ISO-Platten/seitlich und .../Winterbetrieb (Abb.3, Nr.6, 6a) werden bedarfsgerecht und deckungsgleich mit den Zuluftgittern auf- oder abgesetzt und verriegelt/entriegelt (Abb.3, Nr.6b), desgleichen die ISO-Platten/Dach (Abb.3, Nr.7), die in den Aufnahmeschienen (Nr.7a) bis zu 2 Platten übereinander arretiert bzw gelagert werden können.
Die ISO-Platten schützen hierbei das Füllgut vor für den Rotteprozess schädlichen physikalischen Einflüssen, in Verbindung mit dem Einsatz von solarzellen-gespeisten Heizschlangen, die dicht unter der Tragkonstruktion für die Bodenroste befestigt werden können, kann zu extrem kalten Jahreszeiten ein naturgemäß langsamerer Verlauf des Rotteprozesses intensiviert werden, wie dies im gewissen Maße auch die ISO-Platten bewirken. Über die Rückhaltebecken wird das Füllgut bedarfsgerecht (z.B. bei Trockenperioden) mittels Hand- oder Elektropumpen (ggfs auch elektronisch über Feuchtigkeitsfühler prozessgesteuert) oder aus dem installierbaren Entnahmeschacht für Sickersäfte (Abb.3, Nr. 2c) per Gefäß schöpfbar, befeuchtet bzw bei zu nassem Füllgut darüber (inkl. Bodenrost) entfeuchtet. Über die variablen ISO-Platten/Dach kann das Füllgut ebenso beregnet oder geschützt werden.
Die Transparenz der Zuluftgitter ermöglicht Kontrollen über Rottefortgang und mögliche Beschickungsfehler (z.B. unsachgemäß einseitiges Befüllen mit feinstrukturiertem ohne Beigabe von grobstrukturiertem Füllgut) und die Schadensbehebung durch seitliches Einstechen von Kanälen in etwaige Feuchtigkeitsnester (u.U. Füllen der Kanäle mit rottefördernden Naturextrakten).
Füllgut, das bei der Kompostentnahme ungenügend verrottet ist (z.B ungeschredderte Äste oder Strünke) kann zur weiteren Rotte wieder von oben eingebracht werden.

## Patentansprüche

1. Die gemachten Patentanspüche beziehen sich auf alle Funktionen lt. Beschreibung (S. 1-8, Zeilen 01-254) und damit verbundenen Materialien, deren Konstruktion unter den Abb.3-5,
nebst zugehöriger Bezugszeichenliste, Abb.2,
Abb. 7, nebst zugehöriger Bezugszeichenliste, Abb.6,
Abb. 8 und 9 (Eck- und Mittelsäule Jura),
Abb. 10 (Sechsecksäule)
ausgeführt ist.
Die Anspüche beziehen sich im einzelnen auf die geometrischen Formen und Maße, die im Bedarfsfalle jedoch auch andere, als dargestellte, sein können,
- die Materialien Stahl, Stahlbeton, Polymerbeton, Kunststoffe, Holz oder sonstige, geeignete Stoffe,
- die Säulenkonstruktionen (Abb. 8-10)
- die Rückhaltebecken (Abb.3-5 und 7, Nr.2)
- den Zuluftkorb (Abb.3-5, Nr.3)
- die Passage für Kleinstlebewesen/Erdbakterien Abb. 3-5,N3a und Abb.7, Nr.3 in Verbindung mit Nr.3a) und
- alle weiteren Konstruktionsteile unter Abb.2 3b-7b in Verbindung mit Abb. 3-5 und unter Abb.6, Nr 4-7a in Verbindung mit Abb.7.
Der Anspruch bezieht sich auch darauf, daß bei größeren Anlagen das Öffnen/Schließen der Vorrichtungen auch über maschinenbetriebene Antriebe und elektronische Prozesssteuerung erfolgen kann und
die Bodenroste in der Weise maschinell anzuheben oder abzusenken sind, daß sie sich bedarfsgerecht -mit dem Füllgutzum Zwecke eines Fermentationsprozesses, der im Winterbetrieb unter Sonnen/Photovoltaiktechnologie ggfs katalysierbar gemacht wird, auch in tiefer gelegene, als dargestellte Rückhaltebecken, bewegen lassen bzw im Sommerbetrieb auf das in den Abb. dargestellte Niveau zum Ablauf von Rotteprozessen steigen.
